(19) Europäisches Patentamt
European Patent Office
Office européen des brevets

(11) Veröffentlichungsnummer : **0 374 761 B1**

(12) # EUROPÄISCHE PATENTSCHRIFT

(45) Veröffentlichungstag der Patentschrift : **05.02.92 Patentblatt 92/06**

(51) Int. Cl.$^5$ : **C07F 9/48,** C07F 3/02, C08K 5/5393, C08L 23/02

(21) Anmeldenummer : **89123248.0**

(22) Anmeldetag : **15.12.89**

(54) **Verfahren zur Herstellung von phosphororganischen Derivaten des 2,4-Di-t-butylphenols, der 4,4'-Dihalogenmagnesium-Verbindungen des Biphenyls und die Verwendung der phosphororganischen Derivate zur Stabilisierung von Kunststoffen, insbesondere in Polyolefinformmassen.**

Die Akte enthält technische Angaben, die nach dem Eingang der Anmeldung eingereicht wurden und die nicht in dieser Patentschrift enthalten sind.

(30) Priorität : **21.12.88 DE 3843016**
**01.03.89 DE 3906435**

(43) Veröffentlichungstag der Anmeldung : **27.06.90 Patentblatt 90/26**

(45) Bekanntmachung des Hinweises auf die Patenterteilung : **05.02.92 Patentblatt 92/06**

(84) Benannte Vertragsstaaten : **AT BE CH DE ES FR GB IT LI NL SE**

(56) Entgegenhaltungen :
**US-A- 4 077 940**
**US-A- 4 594 382**

(56) Entgegenhaltungen :
**CHEMICAL ABSTRACTS, Band 79, 3. September 1973, Seite 377, Zusammenfassung Nr. 53428h, Columbus, Ohio, US; I.M. GVERDTSITELI et al.: "Synthesis and study of some unsaturated organosilicon compounds based on 4,4'-bis(methylphenylsilyl)biphenyl", & SOOBSHCH. AKAD. NAUK GRUZ. SSR 1973, 69(3), 601-4**
**Gächter/Müller "Taschenbuch der kunststoffadditive Stabilisatoren (1983) ISBN 3-446-13689-4, Seiten 22-24**

(73) Patentinhaber : **HOECHST AKTIENGESELLSCHAFT**
**Postfach 80 03 20**
**W-6230 Frankfurt am Main 80 (DE)**

(72) Erfinder : **Böhshar, Manfred, Dr.**
**Im Förstergrund 14**
**W-6233 Kelkheim/Taunus (DE)**
Erfinder : **Kleiner, Hans-Jerg, Dr.**
**Altkönigstrasse 11a**
**W-6242 Kronberg/Taunus (DE)**
Erfinder : **Waldmann, Karl, Dr.**
**Am Rehsteig 25**
**W-6232 Bad Soden am Taunus (DE)**
Erfinder : **Pfahler, Gerhard, Dr.**
**Karlsbader Strasse 27**
**W-8900 Augsburg (DE)**



Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Verfahren zur Herstellung von phosphororganischen Derivaten des 2,4-Di-t-butylphenols, der 4,4′-Dihalogenmagnesium-Verbindungen des Biphenyls und die Verwendung der phosphororganischen Derivate zur Stabilisierung von Kunststoffen, insbesondere in Polyolefinformmassen.

Die vorliegende Erfindung betrifft ein Verfahren zur Herstellung von phosphororganischen Derivaten des 2,4-Di-t-butylphenols mit einem hohen Gehalt an Tetrakis-(2,4-di-t-butylphenyl)-4,4′-biphenylen-diphosphonit, deren — gegebenenfalls mit einem phenolischen Antioxidans kombinierte — Verwendung zum Stabilisieren von Kunststoffen, insbesondere von Polyolefinen, sowie ein Verfahren zur Herstellung der 4,4′-Dihalogenmagnesium-Verbindungen des Biphenyls.

Es ist bekannt, daß synthetische Polymere gegen unerwünschte oxydative, thermische und photochemische Schädigung während der Herstellung, der Verarbeitung und des Gebrauchs durch Stabilisatoren oder Stabilisatorsysteme geschützt werden müssen. Solche Stabilisatoren bestehen beispielsweise aus einem phenolischen Antioxydans, das insbesondere die Langzeit-Gebrauchsstabilität des Fertigteils gewährleisten soll, und einem oder mehreren Costabilisatoren, die die Verarbeitungsstabilität regeln und teilweise auch die Wirkung der phenolischen Komponente synergistisch verstärken.

Eine bekannte Stabilisatorkombination dieser Art besteht aus einem phenolischen Antioxidans mit einem symmetrischen Triarylphosphit der Formel V (s. Formelblatt), worin der Rest $R^1$ t-Butyl, 1,1-Dimethylpropyl, Cyclohexyl oder Phenyl, einer der Reste $R^2$ und $R^3$ Wasserstoff und der andere Wasserstoff, Methyl oder einer der unter $R^1$ genannten Reste ist (vgl. DE-OS 2606358 = US-PS 4187212). Insbesondere wird Tris-(2,4-di-t-butylphenyl)-phosphit zusammen mit einem phenolischen Antioxidans in der Praxis häufig angewendet. Diese vielbenutzten Stabilisatoren sind jedoch nicht für alle Anwendungen geeignet.

Weiter ist bekannt, Benzolphosphonigsäureverbindungen der Formel VI (s. Formelblatt), worin n = 1 oder 2 ist und $X_1$ und $X_2$ u.a. Phosphonigsäureestergruppen sind, welche Alkylphenylreste enthalten können, zum Stabilisieren von Kunststoffen gegen Abbau durch Licht, Sauerstoff und Wärme zu verwenden (vgl. DE-OS 2152481 = US-PS 3,825,629). Zu den bekannten Verbindungen dieser Art gehört Tetrakis-(2,4-di-t-butyl-phenyl)-4,4′-biphenylendiphosphonit der Formel I (s. Formelblatt), dessen Herstellung dort im Beispiel 12 beschrieben ist. Allerdings reicht die Wirksamkeit der handelsüblichen Verbindung noch nicht aus.

Die Verbindung I wird bisher technisch in einem zweistufigen Verfahren erhalten. In der ersten Stufe setzt man eine mindestens doppelt molare Menge Phosphortrichlorid und Aluminium-(III)-chlorid mit Biphenyl um, komplexiert das Reaktionsprodukt anschließend mit $POCl_3$ um und erhält nach Abtrennung des $AlCl_3$-$POCl_3$-Komplexes das Tetrachlor-4,4′-biphenylen-diphosphonit. Dieses Zwischenprodukt wird in der zweiten Stufe durch Weiterreaktion mit entsprechenden Mengen 2,4-Di-tert.-butylphenol in das Produkt I übergeführt, wobei der freigesetzte Chlorwasserstoff durch eine geeignete Base neutralisiert wird.

Bei diesem bekannten Verfahren entsteht die Verbindung I zusammen mit weiteren Reaktionsprodukten, so daß nur weniger als 50% des Phosphors, bestimmt nach der $^{31}$P-NMR-Analyse, in Form der Verbindung I gebunden sind. Das so erhaltene Gemisch, aus dem die Verbindung I für die technische Anwendung offensichtlich nicht isoliert zu werden braucht, enthält neben phosphorfreien Bestandteilen fünf phosphorhaltige Hauptkomponenten :

| $^{31}$P-NMR ($CDCl_3$): | chem. Verschiebung | % vom Gesamt-P | Zuordnung zur Formel |
|---|---|---|---|
| | $\delta$ = 154,7 ppm | 12,7 | |
| | 154,5 ppm | 12,0 | |
| | 154,2 ppm | 46,0 | I |
| | 153,5 ppm | 15,1 | |
| | 129,8 ppm | 13,7 | 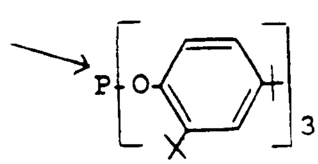 |

Einer der wesentlichen Nachteile dieses Verfahrens besteht darin, daß, bezogen auf die Zielverbindung I,

der Zwangsfall von 2 Äquivalenten $AlCl_3$-$POCl_3$-Komplex in Kauf genommen werden muß. Die Entsorgung dieses Abfallstoffes ist aufwendig.

Phosphororganische Verbindungen, wie Tetrakis-(2,4-di-tert.-butylphenyl)-4,4′-biphenylendiphosphonit I, gegebenenfalls in Kombination mit phenolischen Antioxidantien, als Stabilisatoren für Polypropylen sind aus Gächter/Müller "Taschenbuch der Kunststoffadditive/Stabilisatoren" (1983) ISBN, Seiten 22-24 bekannt. Bei der hierin erwähnten Verbindung I handelt es sich jedoch gleichfalls nur um eine Mischung, die weniger als 50 Gew.-% des Phosphors in Form von I enthält.

Neue Verfahren zur Herstellung von Verbindung I, die derartige Nachteile nicht aufweisen, sind daher sehr erwünscht.

Es wurde nun überraschend gefunden, daß das Diphosphonit der Formel I in einfacher und vorteilhafter Weise sowie größerer Reinheit dadurch hergestellt werden kann, daß man zunächst in erster Stufe ein 4,4′-Dihalogenbiphenyl (II), dessen Halogen ein Atomgewicht von mindestens 35 hat, bevorzugt jedoch Chlor oder Brom ist, unter Grignard-Bedingungen, also zweckmäßig unter inniger Durchmischung, mit Magnesium zur entsprechenden Grignard-Verbindung, dem 4,4′-Dihalogenmagnesiumbiphenyl III, umsetzt und diese in einer zweiten Stufe mit Phosphorigsäure-bis-(2,4-di-t-butylphenyl)-ester-chlorid der Formel IV (s. Patentanspruch 1) weiter unter Bildung eines Gemisches umsetzt, in dem mindestens 50 Gew.-% des Phosphors in Form von Tetrakis-(2,4-di-t-butyl-phenyl)-4,4′-biphenylen-diphosphonit der Formel I (s. Patentanspruch 1) gebunden sind, wobei die Bindung des Phosphors nach der $^{31}P$-NMR-Analyse bestimmt ist.

Aus der Literatur ist bekannt, daß die direkte Grignardierung von Dihalogenbiphenylen zu den Dihalogenmagnesiumbiphenylen III nur unbefriedigend verläuft. Dabei werden zur Erzielung akzeptabler Ausbeuten gewöhnlich "Mitführmittel", wie Äthylbromid, und Hilfsstoffe, wie Hexamethylphosphorsäure-triamid, eingesetzt, deren Verwendung aus toxikologischer Sicht bedenklich ist [Kazakov et al., Sint. Metody. Osn. Elementoorg. Soedin. 1982, 3-6].

Nach einer Ausführungsform der vorliegenden Erfindung arbeitet man nun in der ersten Stufe des erfindungsgemäßen Verfahrens, die man an sich in jeder üblichen Weise durchführen kann, zur Herstellung der 4,4′-Dihalogenmagnesiumbiphenyle III in Abwesenheit eines Mitführmittels bevorzugt so, daß die Dihalogenbiphenyle II direkt mit mindestens 2 Äquivalenten Magnesium zu der Grignardverbindung III umgesetzt werden, wobei das Magnesium durch innige Durchmischung in Suspension gehalten wird. Die Reaktion läßt sich beschleunigen und der Umsetzungsgrad verbessern, wenn man das Magnesium in einem kleinen Überschuß anwendet. Zweckmäßig setzt man 2,2 bis 3 Äquivalente Magnesium je Mol Dihalogenbiphenyl ein. Vorzugsweise hält man die Suspension durch Verwirbelung, insbesondere durch Anwendung von Ultraschall, aufrecht. Der Ultraschall kann durch einen Generator erzeugt werden, der innerhalb oder außerhalb des Reaktionsgefäßes angebracht ist.

Die Umsetzung in der ersten Stufe wird bevorzugt in einem aprotischen, organischen Lösungsmittel wie einem Äther, z.B. Diäthyl-, Dipropyl- oder Diisopropyläther, Äthylenglykoldimethyl- oder -äthyläther, Diäthylenglykoldimethyl- oder -äthyläther, Methyl-tert.-butyläther, Dioxan oder Tetrahydrofuran durchgeführt.

Da die Zwischenprodukte III hydrolyse- und oxydationsempfindlich sind, kann es zweckmäßig sein, unter Schutzgasatmosphäre zu arbeiten. Als Schutzgas sind Stickstoff und Argon besonders geeignet.

Die Reaktionstemperatur liegt im allgemeinen zwischen 20 und 125°C, bevorzugt jedoch zwischen 30 und 70°C. Die Reaktionsdauer kann in weiten Grenzen variiert werden und beträgt je nach Temperatur und Größenordnung des Ansatzes im allgemeinen 2 bis 24 Stunden.

Von den 4,4′-Dihalogen-biphenylen II verwendet man in allen Fällen besonders bevorzugt das 4,4′-Dibrombiphenyl.

Zur weiteren Umsetzung zum Phosphonit I wird die Grignard-Verbindung III zu dem Phosphorigsäure-diester-chlorid IV, das vorteilhaft mit einem inerten aprotischen Lösungsmittel, z.B. Hexan, Toluol, Xylol oder einem der obengenannten Äther verdünnt ist, zudosiert. Die Reaktionsteilnehmer werden bei diesem Schritt im allgemeinen zwischen −30°C und +30°C, vorzugsweise aber zwischen −20°C und 20°C langsam zusammengegeben. Die Umsetzung verläuft schwach exotherm ; daher kann es zweckmäßig sein, den Reaktionsverlauf durch Kühlung zu steuern. Die günstigsten Ergebnisse werden erzielt, wenn man die Reaktionspartner in stöchiometrischen Mengen einsetzt. Es ist aber auch möglich, einen Reaktionspartner im Überschuß einzusetzen; im allgemeinen sind jedoch damit keine besonderen Vorteile verbunden. Zweckmäßig wird gerührt, bis die Umsetzung vollständig ist, was durch Erwärmen auf 0 bis 30°C begünstigt wird, und vom ausgefallenen Magnesiumhalogenid abgetrennt. Die Lösungsmittel können aus dem Filtrat in üblicher Weise, vorteilhaft destillativ, insbesondere unter vermindertem Druck, entfernt werden.

Das Esterchlorid IV ist in einfacher Weise aus Phosphortrichlorid und 2,4-Di-t-butylphenol zugänglich (US-PS 4.739.000). Die Reinheit des so gewonnenen Ausgangsmaterials liegt bei etwa 85-90% (lt. $^{31}P$-NMR).

Die Verbindung I kann nach beliebigen Verfahren aus dem Rohprodukt ausgesondert werden.

Da Estergruppen, die an das Phosphoratom gebunden sind, sich gegenüber metallorganischen Verbindungen grundsätzlich wie Halogenatome verhalten (K. Sasse, Houben-Weyl, Methoden der org. Chemie XII/1, 44), ist es besonders überraschend, daß das Phosphonit I bei dem erfindungsgemäßen Verfahren in höherer Reinheit als bei dem bekannten Verfahren anfällt. Naturgemäß mußte erwartet werden, daß beim Einsatz hochreaktiver, bifunktioneller Grignard-Verbindungen in großem Maße Nebenreaktionen abliefen, die die Ausbeute vermindern. So ist es durch das erfindungsgemäße Verfahren möglich geworden, in zweiter Stufe ein Produkt zu erhalten, in dem mindestens 60% des Phosphors in Form von Tetrakis-(2,4-di-t-butyl-phenyl)-4,4′-biphenylen-diphosphonit gebunden sind.

Wie weiter gefunden wurde, eignet sich das erfindungsgemäß erhaltene Gemisch von phosphororganischen Derivaten des 2,4-Di-t-butylphenols für sich oder in Kombination mit einem phenolischen oder anderen Antioxydans hervorragend zur Stabilisierung von Kunststoffen, insbesondere Polyolefinen und verleiht diesen eine verbesserte Stabilität gegen Abbau durch Licht, Sauerstoff und Wärme. Für diese Verwendung ist eine Isolierung des Tetrakis-(2,4-di-t-butylphenyl)-4,4-biphenylen-diphosphonits in reiner Form nicht notwendig.

Die Erfindung betrifft somit auch eine Polyolefinformmasse, enthaltend ein Olefinpolymeres und Tetrakis-(2,4-di-t-butylphenyl)-4,4′-biphenylendiphosphonit im Verhältnis von (90 bis 99,99) : (0,01 bis 10) Gew.-%, wobei das Phosphonit durch Umsetzung eines 4,4′-Dihalogenbiphenyls, dessen Halogen ein Atomgewicht von mindestens 35 hat, mit Magnesium zur Grignard-Verbindung und anschließende Reaktion mit Phosphorigsäure-bis-(2,4-di-t-butylphenyl)-ester-chlorid hergestellt wurde. Der Anteil des Polyolefins beträgt vorzugsweise 98 bis 99,95 Gew.-%. Polypropylen ist bevorzugt.

Das Polyolefin in der erfindungsgemäßen Formmasse kann beispielsweise eines der folgenden Polymeren sein :

1. Polymere von Mono- oder Diolefinen, beispielsweise Polyäthylen (das gegebenenfalls vernetzt ist), Polypropylen, Polyisobutylen, Polybuten-1, Polymethylpenten-1, Polyisopren oder Polybutadien sowie Polymerisate von Cycloolefinen wie Cyclopenten oder Norbornen.
2. Mischungen der unter 1. genannten Polymeren, z.B. von Polypropylen mit Polyisobutylen.
3. Copolymere von Mono- und Diolefinen untereinander oder mit anderen Vinylmonomeren wie Äthylen-Propylen-Copolymere, Propylen-Buten-1-Copolymere, Propylen-Isobutylen-Copolymere, Äthylen-Buten-1-Copolymere, Propylen-Butadien-Copolymere, Isobutylen-Isopren-Copolymere, Äthylen-Alkylacrylat-Copolymere, Äthylen-Alkylmethacrylat-Copolymere, Äthylen-Vinylacetat-Copolymere oder Äthylen-Acrylsäure-Copolymere und deren Salze (Ionomere), sowie Terpolymere von Äthylen mit Propylen und einem Dien, wie Hexadien, Dicyclopentadien oder Äthylidennorbornen.

Das phenolische Antioxidans ist z.B. ein Ester der 3,3-Bis-(3′-t-butyl-4′-hydroxyphenyl)-butansäure der Formel VII (s. Formelblatt), worin n 1 oder 2 ist und $R^4$ einen $C_1$-$C_{12}$-Alkylrest bedeutet, wenn n 1 ist, und einen $C_1$-$C_{12}$-Alkylenrest, wenn n 2 ist. Vorzugsweise ist $R^4$ ein $C_2$-$C_4$-Alkylenrest, insbesondere ein $C_2$-Alkylenrest.

Das phenolische Antioxidans kann jedoch auch ein Ester der β-(3,5-Di-t-butyl-4-hydroxy-phenyl)-propionsäure der Formel VIII sein (s. Formelblatt), wobei die Alkoholkomponente ein ein- bis vierwertiger Alkohol, wie Methanol, Octadecanol, 1,6-Hexandiol, Neopentylglykol, Diäthylenglykol, Triäthylenglykol, Pentaerythrit, Tris-hydroxyäthyl-isocyanurat, Thiodiäthylenglykol oder Di-hydroxyäthyloxalsäurediamid ist.

Der Anteil des Phosphonits und gegebenenfalls des phenolischen Antioxidans in der erfindungsgemäßen Formmasse beträgt vorteilhaft 0,01 bis 5, vorzugsweise 0,025 bis 1 Gew.-% für das Phosphonit und 0,01 bis 5, vorzugsweise 0,025 bis 1 Gew.-% für das phenolische Antioxidans.

Zusätzlich kann die erfindungsgemäße Formmasse noch andere Antioxidatien enthalten, wie

1. **Alkylierte Monophenole**, z.B. 2,6-Di-t-butyl-4-methylphenol, -4-äthylphenol, -4-n-butylphenol, -4-i-butylphenol, 2-t-Butyl-4,6-dimethylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tri-cyclohexylphenol, 2,6-Di-t-butyl-4-methoxymethylphenol ;
2. **Alkylierte Hydrochinone** wie 2,5-Di-t-butyl- und 2,5-Di-t-amyl-hydrochinon, 2,6-Di-t-butyl-4-methoxyphenol und 2,6-Diphenyl-4-octadecyloxyphenol ;
3. **1.3 Hydroxylierte Thiodiphenyläther** wie 2,2′-Thio-bis-(6-t-butyl-4-methylphenol) und -(4-octylphenol) sowie 4,4′-Thio-bis-(6-t-butyl-3-methylphenol) und -(6-t-butyl-2-methylphenol) ;
4. **Alkyliden-Bisphenole** wie 2,2′-Methylen-bis-(6-t-butyl-4-methylphenol), -(6-t-butyl-4-äthylphenol), -[4-methyl-6-(α-methylcyclohexyl)-phenol], -(4-methyl-6-cyclohexylphenol), -(6-nonyl-4-methylphenol), -(4,6-di-t-butylphenol), -[6-(α-methylbenzyl)-4-nonylphenol], -[6-(α,α-dimethylbenzyl)-4-nonylphenol], 4,4′-Methylen-bis-(2,6-di-t-butylphenols und -(6-t-butyl-2-methylphenol), 2,2′-Äthyliden-bis-(4,6-di-t-butylphenol) und -(6-t-butyl-4-isobutylphenol), 1,1-Bis- und 1,1,3-Tris-(5-t-butyl-4-hydroxy-2-methyl-phenyl)-butan, 2,6-Di-(3-t-butyl-5-methyl-2-hydroxybenzyl)-4-methylphenol,

1,1-Bis-(5-t-butyl-4-hydroxy-2-methylphenyl)-3-n-dodecylmercaptobutan, Di-(3-t-butyl-4-hydroxy-5-methylphenyl)-dicyclo-pentadien ;

5. **Benzylverbindungen** wie Di-[2-(3′-t-butyl-2′-hydroxy-5′-methyl-benzyl)-6-t-butyl-4-methyl-phenyl]-terephthalat, 1,3,5-Tri-(3,5-di-t-butyl-4-hydroxybenzyl)-2,4,6-tri-methylbenzol, Di-(3,5-di-t-butyl-4-hydroxybenzyl)-sulfid, 3,5-Di-t-butyl-4-hydroxybenzyl-mercaptoessigsäureisooctylester, Bis-(4-t-butyl-3-hydroxy-2,6-dimethylbenzyl)-dithiol-terephthalat, 1,3,5-Tris-(3,5-di-t-butyl-4-hydroxybenzyl)-iso-cyanurat, 1,3,5-Tris-(4-t-butyl-3-hydroxy-2,6-dimethylbenzyl)-isocyanurat, 3,5-Di-t-butyl-4-hydroxybenzyl-phosphonsäure-dioctadecylester und das Calciumsalz des 3,5-Di-t-butyl-4-hydroxybenzyl-phosphonsäure-mono-äthylesters ;
6. **Acylaminophenole** wie 4-Hydroxy-laurin- und -stearinsäureanilid, 2,4-Bis-octylmercapto-6-(3,5-di-t-butyl-4-hydroxy-anilino)-s-triazin und N-(3,5-di-t-butyl-4-hydroxyphenyl-carbaminsäure-octylester ;
7. **Ester der β-(5-t-butyl-4-hydroxy-3-methylphenyl)-propionsäure** mit ein- oder mehrwertigen Alkoholen, wie Methanol, Octadecanol, 1,6-Hexandiol, Neopentylglykol, Diäthylenglykol, Triäthylenglykol, Pentaerythrit, Tris-hydroxyäthyl-isocyanurat, Thiodiäthylenglykol oder Di-hydroxyäthyl-oxalsäurediamid ;
8. **Amide der β-(3,5-Di-t-butyl-4-hydroxyphenyl)-propionsäure,** wie N,N′-Di-(3,5-di-t-butyl-4-hydroxyphenylpropionyl)-trimethylendiamin, -hexamethylendiamin und -hydrazin.

Daneben kann die erfindungsgemäße Formmasse noch weitere Additive enthalten, wie

1. UV-Absorber und Lichtschutzmittel, z.B.

1.1 **2-(2′-Hydroxymethyl)-benztriazole,** wie das 5′-Methyl-, 3′,5′-Di-t-butyl-, 5′-t-Butyl-, 5′-(1,1,3,3-Tetramethylbutyl)-, 5-Chlor-3′,5′-di-t-butyl-, 5-Chlor-3′-t-butyl-5′-methyl-, 3′-sec.-Butyl-5′-t-butyl-, 4′-Octoxy-, 3′,5′-Di-t-amyl-, 3′,5′-Bis-(α,α-dimethylbenzyl)-Derivat ;

1.2 **2-Hydroxybenzophenone**, wie das 4-Hydroxy-, 4-Methoxy-, 4-Octoxy-, 4-Decyloxy-, 4-Dodecyloxy-, 4-Benzyloxy-, 4,2′,4′-Trihydroxy-, 2′-Hydroxy-4,4′-dimethoxy-Derivat ;

1.3 **Ester von gegebenenfalls substituierten Benzoesäuren,** wie Phenylsalicylat, 4-t-Butyl-phenylsalicylat, Octylphenylsalicyalat, Dibenzoylresorcin, Bis-(4-t-butylbenzoyl)-resorcin, Benzoylresorcin, 3,5-Di-t-butyl-4-hydroxy-benzoesäure-2,4-di-t-butylphenylester, 3,5-Di-t-butyl-4-hydroxybenzoesäurehexadecylester.

1.4 **Acrylate**, wie α-Cyan-β,β-diphenylacrylsäure-äthylester bzw. -iso-octylester, α-Carbomethoxy- und α-Carbomethoxy-p-methoxy-zimtsäuremethylester, α-Cyano-β-methyl-p-methoxy-zimtsäuremethylester bzw. -butylester, N-(β-Carbomethoxy-β-cyano-vinyl)-2-methyl-indolin ;

1.5 **Nickelverbindungen**, wie Nickelkomplexe des 2,2′-Thio-bis-[4-(1,1,3,3-tetra-methyl-butyl)-phenols], wie der 1 : 1- oder 1 : 2-Komplex, gegebenenfalls mit zusätzlichen Liganden wie n-Butyl-amin, Triäthanolamin oder N-Cyclohexyl-diäthanolamin, Nickelalkyl-dithiocarbamate, Nickelsalze von 4-Hydroxy-3,5-di-t-butyl-benzylphosphonsäure-mono-alkylestern wie vom Methyl- oder Äthylester, Nickelkomplexe von Ketoximen wie von 2-Hydroxy-4-methyl-phenyl-undecylketonoxim, Nickelkomplexe des 1-Phenyl-4-lauroyl-5-hydroxypyrazols, gegebenenfalls mit zusätzlichen Liganden ;

1.6 **Sterisch gehinderte Amine**, wie Bis-(2,2,6,6-tetramethylpiperidyl)-sebacat, -glutarat und -succinat, Bis-(1,2,2,6,6-pentamethylpiperidyl)-sebacat, -glutarat und -succinat, 4-Stearyloxy- und 4-Stearoyloxy-2,2,6,6-tetramethyl-piperidin, 4-Stearoyloxy-1,2,2,6,6-pentamethyl-piperidin, n-Butyl-3,5-di-t-butyl-4-hydroxybenzyl-malonsäure-bis-(1,2,2,6,6-pentamethyl-piperidyl)-ester, Kondensationsprodukt aus 1-Hydroxymethyl-2,2,6,6-tetramethyl-4-hydroxypiperidin und Bernsteinsäure, Kondensationsprodukt aus N,N′-(2,2,6,6-Tetramethyl-4-piperidyl)-hexamethylendiamin und 4-t-Octylamino-2,6-dichlor-1,3,5-s-triazin, Tris-(2,2,6,6-tetra-methyl-4-piperidyl)-nitrilotriacetat, Tetrakis-(2,2,6,6-tetramethyl-4-piperidyl)-1,2,3,4-butantetracarbonsäure,
1,1′-(1,2-Äthandiyl)-bis-(3,3,5,5-tetra-methyl-piperazinon) ;

1.7 **Oxalsäurediamide**, wie 4,4′-Di-octyloxy-oxanilid, 2,2′-Di-octyloxy-5,5′-di-t-butyl-oxanilid, 2,2′-Didodecyloxy-5,5′-di-t-butyloxanilid, 2-Äthoxy-2′-äthyl-oxanilid, N,N′-Bis-(3-dimethylaminopropyl)-oxalamid, 2-Äthoxy-5-t-butyl-2′-äthyloxanilid und dessen Gemisch mit 2-Äthoxy-2′-äthyl-5,4-di-t-butyl-oxanilid, Gemische von o- und p-Methoxy- und -Äthoxy-di-substituierten Oxaniliden ;

2. **Metalldesaktivatoren**, wie N,N′-Diphenyloxalsäurediamid, N-Salicylyl N′-salicyloyl-hydrazin, N,N′-Bis-salicyloylhydrazin, N,N′-Bis-(3,5-di-t-butyl-4-hydroxyphenylpropionyl)-hydrazin, 3-Salicyloyl-amino-1,2,3-triazol, Bis-benzyliden-oxalsäuredihydrazid ;

3. **Peroxid zerstörende Verbindungen**, wie Ester der β-Thio-dipropionsäure, beispielsweise der Lauryl-, Stearyl-, Myristyl- oder Tridecylester, Mercaptobenzimidazol, das Zinksalz des 2-Mercaptobenzimidazols, Zink-alkyl-dithiocarbamate, Dioctadecylsulfid, Pentaerythrit-tetrakis-(β-dodecyl-mercapto)-propionat ;

4. **Basische Co-Stabilisatoren**, wie Melamin, Polyvinylpyrrolidon, Dicyandiamid, Triallyl-cyanurat, Harnstoff-Derivate, Hydrazin-Derivate, Amine, Polyamine, Polyurethane, Alkali- und Erdalkalisalze höherer Fettsäuren oder Phenolate, beispielsweise Ca-, Zn- und Mg-Stearat, Na-Ricinoleat, K-Palmitat, Antimon- oder Zinnbrenzcatechinat, Hydroxide und Oxide von Erdalkalimetallen oder des Aluminiums, beispielsweise CaO, MgO, ZnO ;

5. **Nukleierungsmittel**, wie 4-t-Butylbenzoesäure, Adipinsäure, Diphenylessigsäure ;

6. **Füllstoffe und Verstärkungsmittel**, wie Calciumcarbonat, Silikate, Glasfasern, Asbest, Talk, Kaolin, Glimmer, Bariumsulfat, Metalloxide und -hydroxide, Ruß, Graphit ;

7. **Sonstige Zusätze**, wie Weichmacher, Gleitmittel, Emulgatoren, Pigmente, optische Aufheller, Flammschutzmittel, Antistatika, Treibmittel.

Die Herstellung der erfindungsgemäßen Polyolefinformmasse erfolgt nach üblichen Methoden. Sie kann beispielsweise erfolgen durch Einmischen der Stabilisatoren und gegebenenfalls weiterer Additive nach den in der Technik üblichen Verfahren vor oder während der Formgebung, oder auch durch Aufbringen der gelösten oder dispergierten Verbindungen auf das Polymere, gegebenenfalls unter nachträglichem Verdunsten des Lösemittels oder Dispergiermittels. Die Stabilisatoren können auch in Form eines Masterbatches, welcher diese Produkte in einer Konzentration von ca. 2,5 bis 25 Gew.-% enthalten kann, der herzustellenden Formmasse zugesetzt werden. Eine Zugabe vor einer eventuellen Vernetzung ist ebenfalls möglich.

Die verschiedenen zusätzlichen Additive der vorgenannten Gruppen 1 bis 5 werden der erfindungsgemäßen Formmasse im allgemeinen in einer Menge von 0,01 bis 10, vorzugsweise 0,01 bis 5 Gew.-%, bezogen auf das Gesamtgewicht der Formmasse, zugesetzt. Der Mengenanteil der Additive der Gruppen 6 und 7 beträgt im allgemeinen 1 bis 80, vorzugsweise 10 bis 50 Gew.-%, bezogen auf die gesamte Formmasse.

Die folgenden Beispiele dienen der näheren Erläuterung der Erfindung :

## I Beispiele für die Herstellung

### 1 und 2 — Herstellung der Dihalogenmagnesiumverbindungen

1) Unter Stickstoffatmosphäre und Ausschluß von Feuchtigkeit wurde die Lösung von 70,2 g (= 0,225 mol) 4,4′-Dibrombiphenyl in 180 ml Tetrahydrofuran mit 10,93 g (= 0,45 mol) Mg-Spänen unter Zugabe katalytischer Mengen Jod bis zum Beginn der Grignardierung auf 50°C erwärmt. Nach Abklingen der schwach exothermen Reaktion verdünnte man die Suspension mit 150 ml Tetrahydrofuran und rührte bis zur Auflösung des Magnesiums bei 60°C in einem Ultraschallbad (40 kHz. Frequenz).

2) Es wurde wie im Beispiel 1 gearbeitet, mit dem Unterschied, daß 14,2 g (= 0,58 Mol) Magnesium-Späne verwendet wurden. Man rührte 5 Stunden im Ultraschallbad bei 60°C.

### 3 und 4 — Herstellung der phosphororganischen Derivate

3) Die nach Beispiel 1 erhaltene, grünliche Grignard-Suspension wurde unter lebhaftem Rühren bei einer Temperatur von −15°C bis −5°C zur Lösung von 214,7 g (= 0,45 mol) Phosphorigsäure-bis(2,4-di-t-butylphenyl)-esterchlorid in 250 ml Tetrahydrofuran zudosiert. Nach Entfernung der Kühlung wurde noch 2 1/2 Stunden bei Raumtemperatur gerührt und das Mg-Salz abfiltriert. Nach Abziehen des Lösungsmittels unter vermindertem Druck verblieb ein sprödes Material, das pulverisiert und nochmals unter vermindertem Druck getrocknet wurde (Ausbeute 223 g). 63% des Phosphors waren in Form von Tetrakis-(2,4-di-t-butylphenyl)-4,4′-biphenylen-diphosphonit gebunden.

4) Es wurde wie im Beispiel 3 gearbeitet, jedoch mit dem Unterschied, daß als Lösungsmittel 250 ml eines Gemisches von Tetrahydrofuran und Hexan (Volumenverhältnis 2 : 1) verwendet wurde und man die unter Beispiel 2 erhaltene Grignard-Suspension zudosierte. Man erhielt ca. 220 g eines beigen Pulvers vom Erweichungspunkt 75-77°C, in dem 70% des Phosphors in Form von Tetrakis-(2,4-di-t-butyl-phenyl)-4,4′-biphenylen-diphosphonit gebunden sind.

## II Beispiele für die Verwendung

Das für die Beispiele 5 und 6 verwendete Tetrakis-(2,4-di-t-butylphenyl)-4,4′-biphenylendiphosphonit wurde auf die im Beispiel 3 beschriebene Weise erhalten.

Das in den Vergleichsbeispielen D und E verwendete Tetrakis-(2,4-di-t-butylphenyl)-4,4′-biphenylendiphosphonit wurde nach den Angaben in der DE-OS 2152481 erhalten, indem in der ersten Stufe eine mindestens doppelt molare Menge Phosphortrichlorid und Aluminium-(III)-chlorid mit Biphenyl umgesetzt, das Reaktionsprodukt anschließend mit $POCl_3$ umkomplexiert und nach Abtrennung des $AlCl_3$-$POCl_3$-Komplexes das Tetrachlor-4,4′-biphenylen-diphosphonit erhalten wurde. Dieses Zwischenprodukt wurde in der zweiten

Stufe durch Weiterreaktion mit entsprechenden Mengen 2,4-Di-t-butylphenol in das gewünschte Phosphonit übergeführt, wobei der freigesetzte Chlorwasserstoff durch eine geeignete Base neutralisiert wurde.

**5 und 6 und Vergleichsbeispiele A bis E**

100,0 g unstabilisiertes Polypropylenpulver (Dichte : 0,903 g/cm$^3$ ; Schmelzindex MFI 230/5 : 4 g/10 min) wurden mit 0,1 g Ca-Stearat als Säureakzeptor und 0,05 g Äthylenglykol-bis-(3,3-bis-(3′-t-butyl-4′-hydroxyphenyl)-butyrat sowie den in den Tabellen angegebenen Mengen der Phosphorverbindung vermischt und mittels eines Laborextruders (Kurzkompressionsschnecke, Schneckendurchmesser 20 mm ; Länge 400 mm ; Düse 30 mm lang ; 2 mm Durchmesser ; Drehzahl : 125 Upm ; Temperaturprogramm : 200/230/230°C) mehrfach extrudiert. Nach dem 1., 5. und 10. Durchgang wurden Proben aus dem Granulat entnommen und an diesen Proben der Schmelzindex nach DIN 53 735 sowie die Vergilbung als Yellowness Index nach ASTM D 1925-70 gemessen.

Die Ergebnisse sind in den Tabellen 1 und 2 aufgelistet.

Das erfindungsgemäß zu verwendende Phosphonit bewahrt die Schmelzviskosität der Formmasse auf höchstem Niveau (kleinster Melt-Flow-Index-(MFI-)Wert) und mit der größten Konstanz. Es führt außerdem zu den besten Anfangsfarben der Prüflinge und zur geringsten Farbänderung nach 10-facher Granulierung.

**Tabelle 1** Wirkung von Phosphorverbindungen auf die Verarbeitungsstabilität von Polypropylen Schmelzindex MFI 230/5 nach mehrfacher Granulierung. (MFI in g/10 min)

| Beispiel | Phosphorverbindung | | MFI nach 1. | 5. | 10. Granulierung |
|---|---|---|---|---|---|
| Vgl. A | keine | | 8,0 | 12,7 | 17,5 |
| Vgl. B | 0,05 g | Tris-(2,4-di-t-butyl-phenyl)-phosphonit | 6,7 | 7,5 | 10,5 |
| Vgl. C | 0,10 g | " " | 5,5 | 6,1 | 7,4 |
| Vgl. D | 0,05 g | käufliches Phosphonit*) | 5,7 | 6,1 | 6,7 |
| Vgl. E | 0,10 g | " " | 5,0 | 5,6 | 6,4 |
| 5 | 0,05 g | erfindungsgemäßes Phosphonit*) | 6,0 | 5,8 | 5,8 |
| 6 | 0,10 g | " " | 4,9 | 4,8 | 5,6 |

*) Tetrakis-(2,4-di-t-butylphenyl)-4,4'-biphenylendiphosphonit

**Tabelle 2** Farbverlauf (Yellowness Index nach ASTM D 1925-70) bei mehrfacher Granulierung von Polypropylen.

| Beispiel | Phosphorverbindung | Yellowness Index nach der 1. Granulierung | 5. | 10. Granulierung |
|---|---|---|---|---|
| Vgl. A | keine | 8,9 | 13,4 | 19,3 |
| Vgl. B | 0,05 g Tris-(2,4-di-t-butyl-phenylphosphonit) | 9,0 | 18,8 | 32,3 |
| Vgl. C | 0,1 g " | 8,1 | 13,1 | 26,6 |
| Vgl. D | 0,05 g käufliches Phosphonit*) | 4,7 | 6,6 | 11,3 |
| Vgl. E | 0,1 g " " | 4,7 | 6,1 | 9,5 |
| 5 | 0,05 g erfindungsgemäßes Phosphonit*) | 5,9 | 6,8 | 10,1 |
| 6 | 0,1 g " " | 5,3 | 5,6 | 7,8 |

*) Tetrakis-(2,4-di-t-butylphenyl)-4,4'-biphenylendiphosphonit

## Patentansprüche

1. Verfahren zur Herstellung von phosphororganischen Derivaten des 2,4-Di-t-butylphenols mit einem hohen Gehalt an phosphororganischen Derivaten des Biphenyls, dadurch gekennzeichnet, daß man in erster Stufe ein 4,4′-Dihalogenbiphenyl, dessen Halogen ein Atomgewicht von mindestens 35 hat, unter Grignard-Bedingungen mit Magnesium zur entsprechenden Grignard-Verbindung umsetzt und diese in einer zweiten Stufe mit Phosphorigsäurebis-(2,4-di-t-butylphenyl)-ester-chlorid der Formel IV

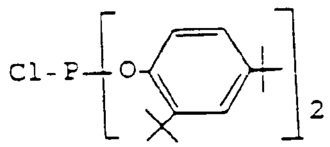

IV

weiter unter Bildung eines Gemisches umsetzt, in dem mindestens 50 Gew.-% des Phosphors in Form von Tetrakis-(2,4-di-t-butylphenyl)-4,4′-biphenylendiphosphonit der Formel I

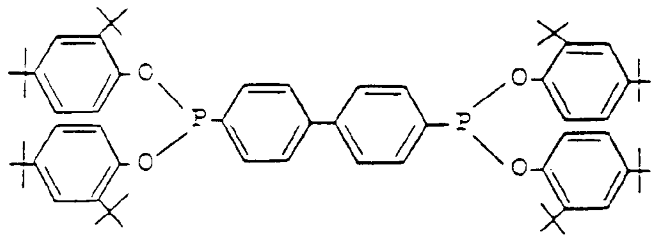

I

gebunden sind, wobei die Bindung des Phosphors nach der $^{31}P$-NMR-Analyse bestimmt ist.

2. Verfahren nach Anspruch 1, dadurch gekennzeichnet, daß die Herstellung der Grignard-Verbindung in der ersten Stufe in Abwesenheit eines Mitführmittels erfolgt.

3. Verfahren nach Anspruch 1 oder 2, dadurch gekennzeichnet, daß man das 4,4′-Dihalogen-biphenyl in der ersten Stufe mit feinteiligem Magnesium umsetzt, das in Suspension gehalten wird.

4. Verfahren nach Anspruch 3, dadurch gekennzeichnet, daß man die feinteilige Dispersion des Magnesiums durch Verwirbelung, vorzugsweise durch Ultraschall, aufrechterhält.

5. Verfahren nach einem oder mehreren der Ansprüche 1 bis 4, dadurch gekennzeichnet, daß man in zweiter Stufe ein Produkt erhält, in dem mindestens 60% des Phosphors in Form von Tetrakis-(2,4-di-butyl-t-phenyl)-4,4′-biphenylen-diphosphonit gebunden sind.

6. Verfahren nach einem oder mehreren der Ansprüche 1 bis 5, dadurch gekennzeichnet, daß man in der zweiten Stufe zwischen −30 und +30°C, vorzugsweise zwischen −20 und +20°C arbeitet.

7. Verfahren zur Herstellung von 4,4′-Dihalogenmagnesium-Verbindungen des Biphenyls durch Umsetzung eines 4,4′-Dihalogenbiphenyls, dessen Halogen ein Atomgewicht von mindestens 35 hat, mit Magnesium in Abwesenheit eines Mitführmittels, dadurch gekennzeichnet, daß man ein 4,4′-Dihalogenbiphenyl, dessen Halogen ein Atomgewicht von mindestens 35 hat, mit feinteiligem Magnesium umsetzt, das in Suspension gehalten wird.

8. Verfahren nach Anspruch 7, dadurch gekennzeichnet, daß man die feinteilige Dispersion des Magnesiums durch Verwirbelung, vorzugsweise durch Ultraschall, aufrechterhält.

9. Verfahren nach Anspruch 7 oder 8, dadurch gekennzeichnet, daß 2,2 bis 3 Äquivalente Magnesium je Mol Dihalogenbiphenyl verwendet werden.

10. Verfahren nach einem oder mehreren der Ansprüche 1 bis 9, dadurch gekennzeichnet, daß das Halogen im 4,4′-Dihalogenbiphenyl Chlor oder Brom ist.

11. Verwendung eines nach einem oder mehreren der Ansprüche 1 bis 6 erhaltenen Gemisches von phosphororganischen Derivaten des 2,4-Di-t-butylphenols mit einem hohen Gehalt an phosphororganischen Derivaten des Biphenyls für sich oder in Kombination mit einem phenolischen Antioxidans zur Stabilisierung von Kunststoffen, insbesondere Polyolefinen

12. Polyolefinformmasse, enthaltend ein Olefinpolymeres und Tetrakis-(2,4-di-t-butylphenyl)-4,4′-biphenylendiphosphonit im Verhältnis von (90 bis 99,99) : (0,01 bis 10) Gew.-%, dadurch gekennzeichnet, daß sie ein Tetrakis-(2,4-di-t-butylphenyl)-4,4′-biphenylendiphosphonit enthält, welches durch Umsetzung eines 4,4′-Dihalogenbiphenyls, dessen Halogen ein Atomgewicht von mindestens 35 hat, mit Magnesium zur Grignard-Verbindung und anschließende Reaktion mit Phosphorigsäure-bis-(2,4-di-t-butylphenyl)-ester-chlorid gemäß

einem oder mehreren der Ansprüche 1 bis 6 hergestellt wurde, und gegebenenfalls noch übliche Zusatzstoffe.

13. Polyolefinformmasse nach Anspruch 12, dadurch gekennzeichnet, daß sie

a) das Olefinpolymere,
b) das genannte Phosphonit und
c) einen Ester von $c_1$) der 3,3-Bis-(3″-t-butyl-4′-hydroxyphenyl)-butansäure der Formel VII

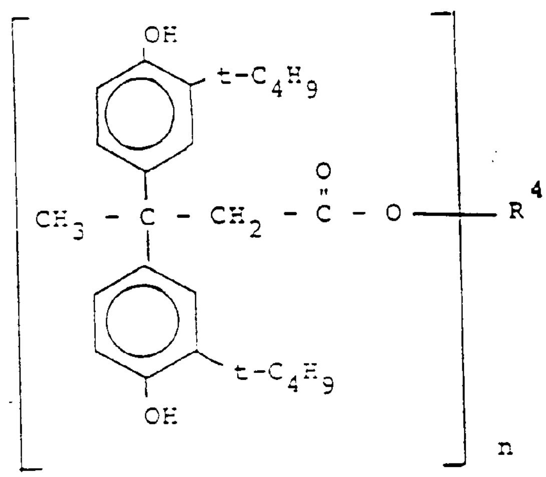

VII

worin n 1 oder 2 ist und $R^4$ einen $C_1$-$C_{12}$-Alkylenrest bedeutet, wenn n gleich 2 ist, oder $C_1$-$C_{12}$-Alkylrest bedeutet, wenn n gleich 1 ist, oder $c_2$ der β-(3,5-di-t-butyl-4-hydroxy-phenyl)-propionsäure der Formel VIII

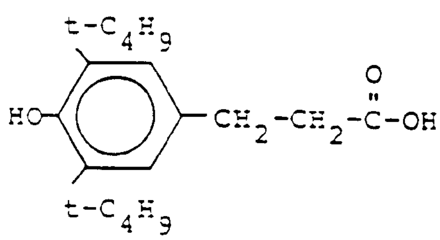

VIII

mit einem ein- oder mehrwertigen Alkohol im Verhältnis a : b : c von (90 bis 99,98) : (0,01 bis 5) : (0,01 bis 5) Gew.-%, vorzugsweise von (98 bis 99,95) :(0,025 bis 1) : (0,025 bis 1) enthält.

14. Polyolefinformmasse nach Anspruch 12 oder 13, dadurch gekennzeichnet, daß das Polyolefin Polypropylen ist.

## Claims

1. A process for the preparation of organophosphorus derivatives of 2,4-di-tert-butylphenol with a high proportion of organophosphorus derivatives of biphenyl, which comprises reacting, in a first step, a 4,4′-dihalobiphenyl whose halogen has an atomic weight of at least 35 under Grignard conditions with magnesium to form the corresponding Grignard compound, and this is further reacted in a second step with bis (2,4-di-tert-butylphenyl) chlorophosphite of the formula IV

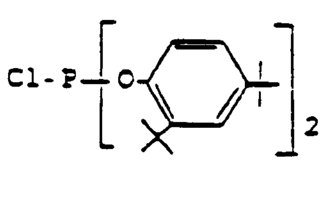

IV

with the formation of a mixture in which at least 50% by weight of the phosphorus is combined in the form of

tetrakis(2,4-di-tert-butylphenyl) 4,4-biphenylene diphosphonite of the formula I

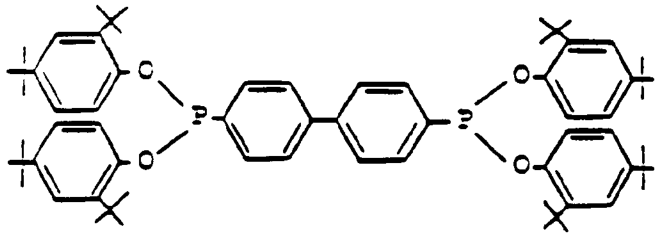

I

the bonding of the phosphorus being determined by $^{31}$p-NMR analysis.

2. The process as claimed in claim 1, wherein the preparation of the Grignard compound in the first step takes place in the absence of an entrainer.

3. The process as claimed in claim 1 or 2, wherein in the first step the 4,4′-dihalo-biphenyl is reacted with finely particulate magnesium held in suspension.

4. The process as claimed in claim 3, wherein the fine particles of magnesium are maintained in dispersion by vortexing, preferably by using ultrasound.

5. The process as claimed in one or more of claims 1 to 4, wherein the product obtained in the second step contains at least 60% of the phosphorus combined in the form of tetrakis(2,4-di-tert-butylphenyl) 4,4′-biphenylenediphosphonite.

6. The process as claimed in one or more of claims, 1 to 5, wherein the second step is carried out at between −30 and +30°C, preferably between −20 and +20°C.

7. A process for the preparation of 4,4′-dihalomagnesium compounds of biphenyl by reacting a 4,4′-dihalobiphenyl whose halogen has an atomic weight of at least 35 with magnesium in the absence of an entrainer, which comprises reacting a 4,4′-dihalobiphenyl whose halogen has an atomic weight of at least 35 with finely particulate magnesium held in suspension.

8. The process as claimed in claim 7, wherein the fine particles of magnesium are maintained in dispersion by vortexing, preferably by using ultrasound.

9. The process as claimed in claim 7 or 8, wherein 2.2 to 3 equivalents of magnesium are used per mol of dihalobiphenyl.

10. The process as claimed in one or more of claims 1 to 9, wherein the halogen in the 4,4′-dihalobiphenyl is chlorine or bromine.

11. The use of a mixture of organophosphorus derivatives of 2,4-di-tert-butylphenol with a high proportion of organophosphorus derivatives of biphenyl, obtained in accordance with one or more of claims 1 to 6, on its own or in combination with a phenolic antioxidant, for the stabilization of plastics, in particular polyolefins.

12. A polyolefin molding composition, containing an olefin polymer and tetrakis(2,4-di-tert-butylphenyl) 4,4′-biphenylene diphosphonite in the ratio of (90 to 99.99) : (0.01 to 10)% by weight, wherein the phosphonite has been prepared by reacting a 4,4′-dihalobiphenyl whose halogen has an atomic weight of at least 35 with magnesium to form a Grignard compound and then reacting with bis(2,4-di-tert-butylphenyl) chlorophosphite, in accordance with one or more of claims 1 to 6, and also, optionally, conventional additives.

13. A polyolefin molding composition as claimed in claim 12, which contains

a) the olefin polymer,
b) the stated phosphonite and
c) an ester of $c_1$) the 3,3-bis(3′-tert-butyl-4′-hydroxyphenyl)butanoic acid, of the formula VII

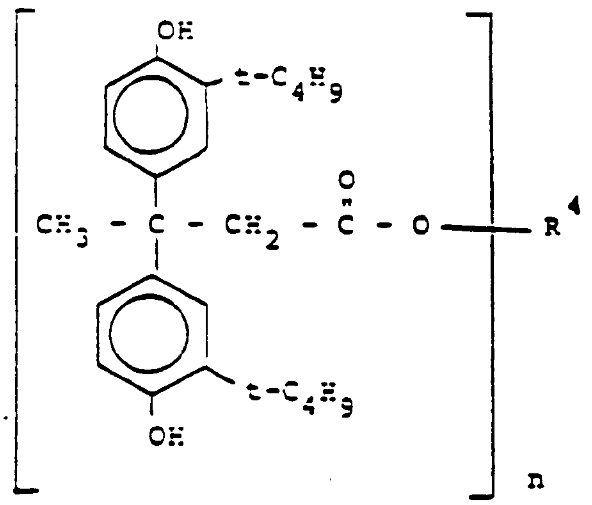

VII

in which n is 1 or 2 and $R^4$ is a $C_1$-$C_{12}$-alkyl radical, if n is 1, or a $C_1$-$C_{12}$-alkylene radical if n is 2, or $C_2$)β-(3,5-di-tert-butyl-4-hydroxy-phenyl) propionic acid of the formula VIII

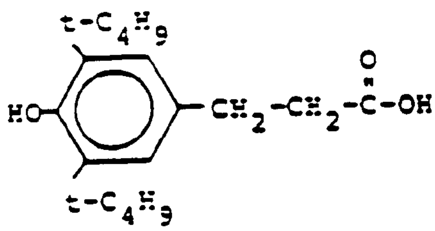

VIII

with a monohydric or polyhydric alcohol in a ratio a : b : c : of (90 to 99.98) : (0.01 to 5) : (0 : 01 to 5)% by weight, preferably (98 to 99.95) : (0.025 to 1) : (0.025 to 1).

14. A polyolefin molding composition as claimed in claim 12 or 13, wherein the polyolefin is polypropylene.

## Revendications

1. Procédé pour préparer des dérivés organo-phosphorés du di-tert-butyl-2,4 phénol à haute teneur en dérivés organo-phosphorés du biphényle, procédé caractérisé en ce que, dans une première étape, on fait réagir un dihalogéno-4,4′ diphényle dont l'halogène a une masse atomique au moins égale à 35, dans des conditions de Grignard, avec du magnésium pour obtenir le composé de Grignard correspondant, et, dans une deuxième étape, on fait réagir celui-ci avec le chlorure ester bis-(di-tert-butyl-2,4 phénylique) de l'acide phosphoreux, qui répond à la formule IV :

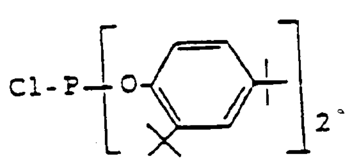

IV,

de manière à former un mélange dans lequel au moins 50% en poids du phosphore sont fixés sous la forme de biphénylylène-4,4′ diphosphonite de tétrakis-(di-tert-butyl-2, 4 phényle) de formule I

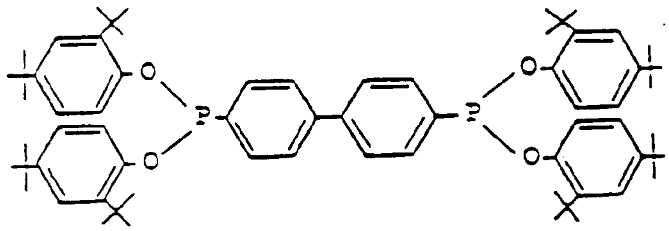 I,

la liaison du phosphore étant déterminée par analyse de RMN $^{31}$p.

2. Procédé selon la revendication 1 caractérisé en ce que la préparation du composé de Grignard est effectuée, dans la première étape, sans agent entraîneur.

3. Procédé selon l'une des revendications 1 et 2, caractérisé en ce qu'on fait réagir le dihalogéno-4,4′ biphényle, dans la première étape, avec du magnésium en fines particules qui est maintenu en suspension.

4. Procédé selon la revendication 3 caractérisé en ce que la fine dispersion du magnésium est maintenue par création de tourbillons, de préférence au moyen d'un ultrason.

5. Procédé selon l'une quelconque des revendications 1 à 4, caractérisé en ce que, dans la deuxième étape, on obtient un produit dans lequel au moins 60% du phosphore sont fixés sous la forme de biphénylylène-4,4′ diphosphonite de tétrakis-(di-tert-butyl-2,4 phényle).

6. Procédé selon l'une quelconque des revendications 1 à 5, caractérisé en ce qu'on opère, dans la deuxième étape, à une température comprise entre −30 et +30°C, de préférence entre −20 et +20°C.

7. Procédé pour préparer des composés bis-(halogénomagnésiens) en 4,4′ du biphényle par réaction d'un dihalogéno-4,4′ biphényle dont l'halogène a une masse atomique d'au moins 35, avec du magnésium en l'absence d'un agent entraîneur, procédé caractérisé en ce qu'on fait réagir un dihalogéno-4,4′ biphényle dont l'halogène a une masse atomique au moins égale à 35, avec du magnésium en fines particules qui est maintenu en suspension.

8. Procédé selon la revendication 7 caractérisé en ce que la fine dispersion du magnésium est maintenue par création de tourbillons, de préférence au moyen d'un ultrason.

9. Procédé selon l'une des revendications 7 et 8, caractérisé en ce qu'on utilise de 2,2 à 3 équivalents de magnésium par mole du dihalogénobiphényle.

10. Procédé selon l'une quelconque des revendications 1 à 9, caractérisé en ce que l'halogène, dans le dihalogéno-4,4′ biphényle, est le chlore ou le brome.

11. Application d'un mélange, obtenu selon l'une quelconque des revendications 1 à 6, de dérivés organo-phosphorés du di-tert-butyl-2,4 phénol à haute teneur en dérivés organophosphorés du biphényle, isolément ou en association avec un anti-oxydant phénolique, pour la stabilisation de matières plastiques, plus particulièrement de polyoléfines.

12. Matière à mouler à base de polyoléfines renfermant un polymère d'oléfines et du biphénylylène-4,4′ diphosphonite de tétrakis-(di-tert-butyl-2,4 phényle) dans un rapport de (90 à 99,99) : (0,01 à 10)% en poids, matière à mouler caractérisée en ce qu'elle contient un biphénylylène-4,4′ diphosphonite de tétrakis-(di-tert-butyl-2,4 phényle) qui a été préparé par réaction d'un dihalogéno-4,4′ biphényle dont l'halogène a une masse atomique d'au moins 35, avec du magnésium, puis réaction du composé de Grignard obtenu avec le chlorure ester bis-(di-tert-butyl-2,4 phénylique) de l'acide phosphoreux, selon l'une quelconque des revendications 1 à 6, et en outre, éventuellement, des additifs usuels.

13. Matière à mouler à base de polyoléfines selon la revendication 12, caractérisée en ce qu'elle contient:

a) le polymère d'oléfines,
b) le phosphonite mentionné et
c) un ester $c_1$) de l'acide bis-(tert-butyl-3 hydroxy-4 phényl)-3,3 butanoïque répondant à la formule VII

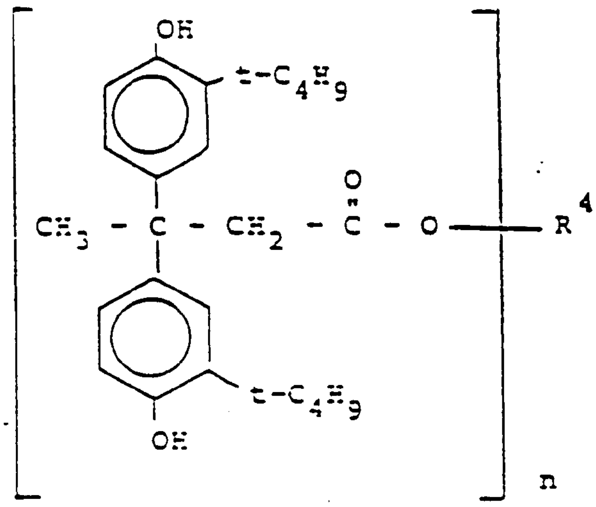

dans laquelle n est égal à 1 ou à 2 et $R^4$ représente un radical alkyle en $C_1$-$C_{12}$ lorsque n est égal à 1 et un radical alkylène en $C_1$-$C_{12}$ lorsque n est égal à 2, ou $c_2$) de l'acide (di-tert-butyl-3,5 hydroxy-4 phényl)-3 propionique de formule VIII

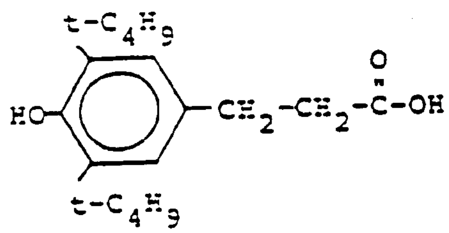

VIII

avec un monoalcool ou un polyalcool, dans un rapport a : b : c de (90 à 99,98) : (0,01 à 5) : (0,01 à 5)% en poids, de préférence de (98 à 99,95) : (0,025 à 1) : (0,025 à 1).

14. Matière à mouler à base de polyoléfines selon l'une des revendications 12 et 13, caractérisée en ce que la polyoléfine est un polypropylène.

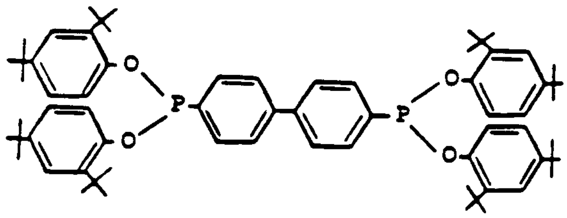

I

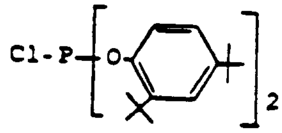

IV

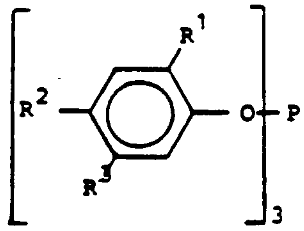

V

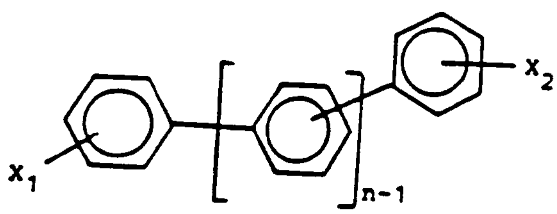

VI

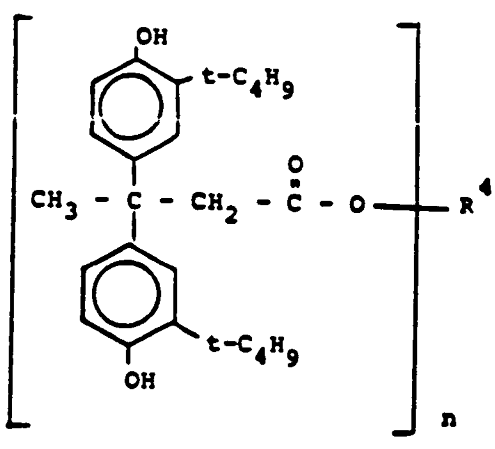

VII

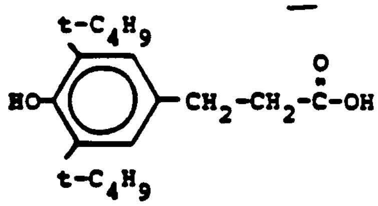

VIII